# EUROPÄISCHE PATENTSCHRIFT

(11) **EP 0 667 098 B1**
(45) Veröffentlichungstag und Bekanntmachung des Hinweises auf die Patenterteilung: **25.03.1998**
(21) Anmeldenummer: 95101777.1
(22) Anmeldetag: 09.02.1995
(51) Int. Cl.: A21C 3/00, A21C 3/02, A21C 11/10, A47J 43/20, A47J 43/28

(54) **Rolle mit einem Griff zum Ausrollen und/oder Andrücken von Teig für Backwaren**
Roller with a handle for rolling or pressing dough
Rouleau avec un manche pour rouler ou presser la pâte

(30) Priorität: 10.02.1994 DE 9402232 U
(43) Veröffentlichungstag der Anmeldung: 16.08.1995
(73) Patentinhaber: Röcker, Hans, Dipl.-Ing., D-35315 Homberg/Ohm (OT Büssfeld) (DE)
(72) Erfinder: Röcker, Hans, Dipl.-Ing., D-35315 Homberg/Ohm (OT Büssfeld) (DE)
(74) Vertreter: Knefel, Cordula, Dipl.-Phys.

(56) Entgegenhaltungen:
- US-A- 3 157 135
- US-A- 3 217 666
- US-A- 4 156 968

## Beschreibung

Die Erfindung betrifft eine Rolle mit einem Griff zum Ausrollen und/oder Andrücken von Teig für Backwaren. Zum großflächigen Ausrollen eines Teiges verwendet man ein sogenanntes Nudelholz mit zwei Griffen. Zum Ausrollen eines in eine Form gelegten Teiges, insbesondere zum Glattrollen der Teigoberfläche in der Nähe des Formrandes, verwendet man dagegen besser kürzere Rollen, welche entweder zylindrisch ausgebildet sind, zum Beispiel zum Rollen des Teiges längs eines geradlinigen Formrandes, oder kegelstumpfförmig ausgebildete Rollen zum Ausrollen des Teiges an einem gekrümmt verlaufenden Rand einer Kuchenform, wie Tortenform. Eine Rolle, der der Oberbegriff von Anspruch 1 entspricht, ist aus US-A-3 217 666 bekannt.

Die bekannten Rollen zeigen den Nachteil, daß für jede Rollart eine besondere Rolle mit einem Griff erforderlich ist, was einen großen Lageraufwand bedingt. Außerdem hat sich gezeigt, daß beim Ausrollen eines derartigen Teiges die zum Stand der Technik gehörenden Rollen einen Teigwulst vor sich bilden und diesen Wulst beim Glattrollen und Andrücken des Teiges vor sich herschieben, was unerwünscht ist. Außerdem reißt der Teig beim Rollvorgang mit der Rolle nach dem Stand der Technik häufig ab, was in hohem Maße unerwünscht ist.

Aufgabe der Erfindung ist es, eine Rolle anzugeben, bei der beim Ausrollen des Teiges eine sich vor der Rolle bildende Wulst und ein Abreißen des Teiges weitgehendst vermieden wird, und die darüber hinaus für verschiedene Rollvorgänge verwendbar ist.

Diese Aufgabe wird durch das kennzeichnende Merkmal des Anspruches 1 gelöst.

Dadurch, daß die Rolle auf eine Achse steckbar ist, kann sie von dieser Achse abgezogen und gegen eine andere ausgewechselt werden. Dadurch, daß die Achse ferner zum Griff hin schräg nach oben verlaufend abgewinkelt ist und darüber hinaus eine Abwinklung trägt, die die Rolle umgreift, derart, daß der Griff etwa symmetrisch zur Mittellinie der Rolle in Bewegungsrichtung gesehen angeordnet ist und auf die Rolle einen Druck überträgt, der stark nach unten gerichtet ist, erhält man bei der normalen Handhabung der Rolle und normalen Stellung des Griffes einen Auflagedruck der Rolle auf den auszurollenden Teig, der aufgrund der statischen Kräfteverhältnisse funktionelle und ergonomische Vorteile gegenüber den zum Stand der Technik gehörenden Teigrollen zeigt. Durch diese statischen und ergonomischen Vorteile bedingt, bildet sich vor der Rolle beim Ausrollen des Teiges keine nennenswerte Wulst mehr, wenn der ausgeübte Druck der Rollen in normalen Grenzen gehalten wird. Darüber hinaus hat sich gezeigt, daß die erfindungsgemäße Rolle äußerst leichtgängig über den auszurollenden Teig geführt werden kann, da die ausgeübte Kraft im wesentlichen parallel zur Oberfläche des Teiges ausgeübt wird und zum Teig hin nur eine Kraftkomponente, bedingt durch die Abwinklung des Griffes, hin gerichtet ist. Darüber hinaus hat sich gezeigt, daß durch die Abwinklung des Griffes der Rolle bedingt, ein Abreißen des Teiges bei dem Ausrollvorgang nicht mehr erfolgt.

Für das Ausrollen des Teiges zu einer ebenen Fläche wird man als Rolle eine zylindrisch ausgebildete Rolle verwenden, wenn die Rolle entlang eines geradlinigen Kuchenformrandes geführt werden soll. Für das Ausrollen des Teiges längs eines gebogenen Randes einer Form (Tortenform) verwendet man zweckmäßig eine Rolle, welche nach Art eines Kegelstumpfes ausgebildet ist, weil dann die Rolle praktisch von selbst der Randlinie der Form folgt, wenn der Kegelwinkel entsprechend der Krümmung des Randes geeignet gewählt worden ist.

Da es nach dem Vorhergesagten vorteilhaft ist, je nach gewünschtem Rollvorgang unterschiedliche Rollen zu verwenden, ist in weiterer Ausgestaltung der Erfindung ein Rollensatz vorgesehen, einerseits mit unterschiedlichen Kegelwinkeln, andererseits aber auch mit zylindrisch ausgebildeten Rollen, um unterschiedlich ausgebildeten Rändern einer Kuchenform ohne Schwierigkeiten folgen zu können.

Zu dem vorgesehenen Rollensatz kann auch eine Rolle gehören, deren Oberfläche Erhebungen und/oder Vertiefungen trägt. Bei Überrollen eines flächenartig ausliegenden Teiges werden dann im Teig Abdrücke und/oder Erhebungen erzeugt, welche beispielsweise Bilddarstellungen beinhalten können, wie es unter anderem bei Spekulatiuskeksen bekannt ist.

Weitere Einzelheiten der Erfindung können den Unteransprüchen entnommen werden.

Auf der Zeichnung ist ein Ausführungsbeispiel der Erfindung dargestellt, und zwar zeigen:
- Fig. 1: ein erstes Ausführungsbeispiel in Seitenansicht;
- Fig. 2: die Ansicht der Fig. 1 in Richtung des Pfeiles II;
- Fig. 3: ein geändertes Ausführungsbeispiel;
- Fig. 4: ein geändertes Ausführungsbeispiel;
- Fig. 5: eine Darstellung zur Erläuterung der Wirkungsweise der Erfindung.

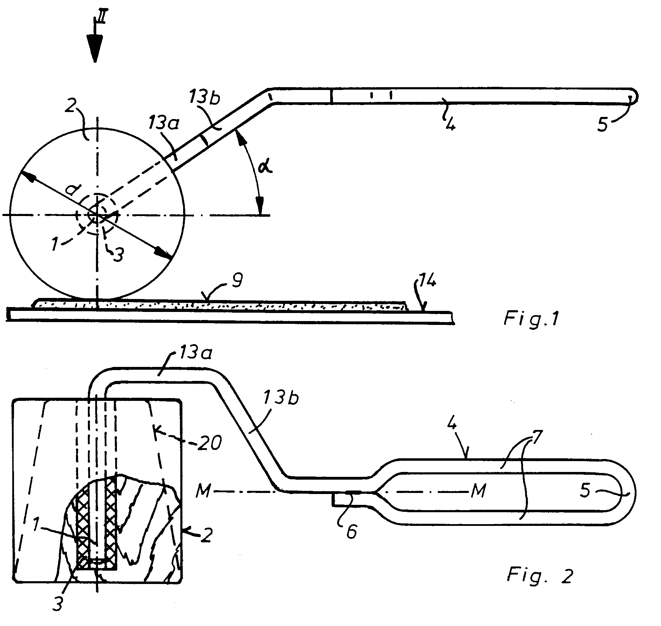

Gemäß den Fig. 1 und 2 ist auf eine aus einem starken Draht bestehenden Achse (1) eine zylindrisch ausgebildete Rolle (2) gesteckt. Die Rolle (2) trägt hierzu eine Lagerhülse (3) aus Kunststoff, in die die Achse (1) gesteckt werden kann. Die Achse (1) läuft in eine Abwinklung (13a, 13b) aus. Der Teil (13a) ist um 90° zur Achse (1) abgewinkelt. Diese Abwinklung (13a) ist etwas länger gehalten als der Radius der Rolle (2). Der Teil (13a) der Abwinklung kann damit zusammen mit dem Teil (13b) die Rolle (2) umgreifen, derart, daß die Abwinklung bis zur Mittellinie (M-M) der Rolle, in Bewegungsrichtung der Rolle gesehen, umgelenkt wird und andererseits zu einem höhenversetzten Griff (4) ausläuft. Der Teil (13b) der Abwinklung ist hierzu um den Winkel α von etwa 35° zum Griff (4) hin nach oben geneigt ausgebildet.

Der Griff (4) besteht aus einer Fortsetzung des Drahtes der Abwinklungen (13a und 13b). Das Ende (5) des Griffdrahtes ist U-förmig umgebogen, so daß zwei Drahtabschnitte (7) mit parallelem Abstand voneinander den eigentlichen Griff (4) bilden. Die Drahtabschnitte (7) sind wieder zusammengeführt und an der Berührungsstelle (6) miteinander verschweißt.

Die Länge des Teiles (13b) ist so groß bemessen, daß der Rollendurchmesser (d) kleiner ist als der Abstand des Griffes (4) von der parallel zum Griff (4) liegenden Kuchenteigunterlage (14). Die den Griff umgreifende Hand des Benutzers kommt nicht mit dem Kuchenteig (9) in Berührung, wenn der Griff (4) parallel zur Unterlage (14) gehalten wird. Der Benutzer schiebt dann die Rolle (2) unbewußt etwa parallel zur Unterlage (14) des Kuchenteiges vorwärts.

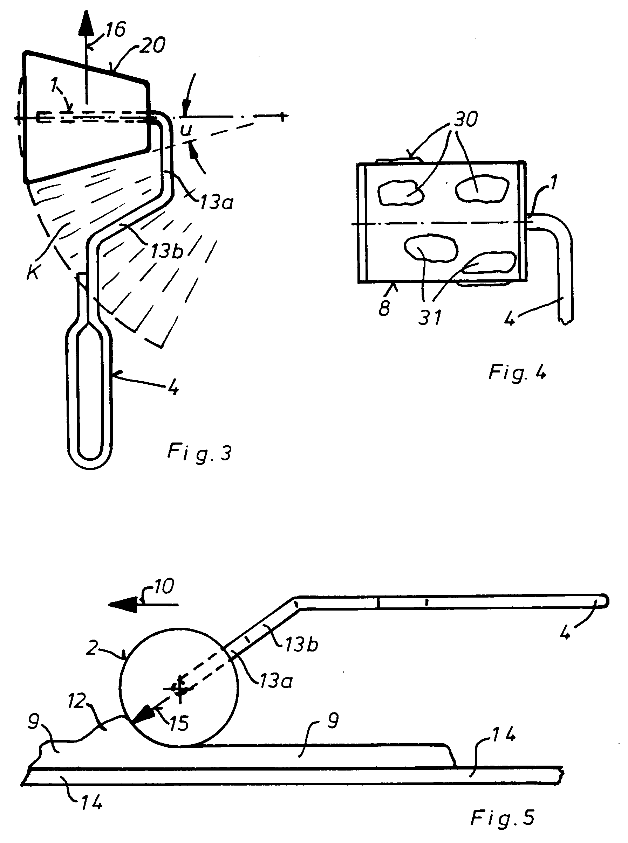

Fig. 5 zeigt die Wirkungsweise der Rolle (2) nach den Fig. 1 und 2. Der Griff (4) wird in Richtung des Pfeiles (10) geschoben, und zwar aus ergonomischen Gründen wegen der vorgesehenen Abwinklung (13b) parallel zur Unterlage (14) des Kuchenteiges (9). Der Griff (4) wird hierbei automatisch parallel zur Unterlage (14) gehalten, so daß sich selbsttätig eine günstige Kräfteverteilung beim Vorwärtsschieben der Rolle (2) einstellt. Die Vorschubkraft in Richtung des Pfeiles (10) bewirkt, daß auf den Teig (9) in Richtung des Pfeiles (15) nur ein geringer Druck ausgeübt wird. Deshalb kann die Kraft für den Vorschub relativ gering angesetzt werden, so daß zum Vorschieben der Rolle (2) einerseits kein großer Kraftaufwand notwendig ist und andererseits sich vor der Rolle (2) keine Teigwulst (12) bildet. Außerdem hat sich gezeigt, daß aufgrund dieser Ausbildung der Rolle der Teig beim Ausrollen nicht abreißt.

Gemäß Fig. 3 ist auf die Achse (1) eine kegelstumpfförmige Rolle (20) gesteckt. Die Kraftverhältnisse sind hier dieselben wie bei der zylindrischen Rolle nach den Fig. 1 und 2. Bewegt man diese Rolle (20) in Richtung des Pfeiles (16), dann bewegt sich die Rolle (20) auf einer kreisförmigen Ringfläche (K). Je nach Neigungswinkel (u) des Kegelstumpfes folgt diese Rolle (20) bei Bewegung in Richtung des Pfeiles (16) einer Kreisringfläche (K) mit mehr oder minder großem Radius.

Fig. 4 zeigt eine Rolle (8), in die Erhebungen (30) und Vertiefungen (31) eingebracht worden sind. Wird diese Rolle über einen flächenförmig ausgerollten Teig (9) bewegt, entstehen in der Oberfläche des Teiges Abdrücke, welche beim Backen bleibende Formen bilden. Die Rolle (8) gemäß Fig. 4 ist zylindrisch ausgebildet. Sie kann aber ebenso wie die Rolle (20) gemäß der Fig. 3 kegelförmig ausgebildet sein oder einen andersartigen Längsquerschnitt aufweisen.

Zweckmäßig bestehen die Rollen aus Holz, vorzugsweise Buchenholz. Die Achse (1), die Abwinklungen (13a und 13b) sowie der Griff (4) sind aus einem einzigen Edelstahldraht gebogen.

### Bezugszahlen

- 1: Achse
- 2: zylindrische Rolle
- 3: Lagerhülse
- 4: Griff
- 5: U-förmiges Ende des Griffes
- 6: Berührungsstelle
- 7: Drahtabschnitte
- 8: Rolle mit Erhebungen und Vertiefungen
- 9: Kuchenteig
- 10: Pfeil (Bewegungsrichtung)
- 12: Wulst
- 13a: Teil der Abwinklung
- 13b: Teil der Abwinklung
- 14: Unterlage
- 15: Pfeil
- 16: Pfeil
- 20: kegelstumpfartige Rolle
- 30: Erhebung
- 31: Vertiefung
- K: kreisförmige Ringfläche
- u: Neigungswinkel
- M-M: Mittellinie
- α: Winkel
- d: Rollendurchmesser

## Patentansprüche

1. Rolle mit einem Griff zum Ausrollen und/oder Andrücken von Teig für Backwaren, wobei
die Rolle (2, 8, 20) eine Aufnahme (3) für eine zum Griff (4) hin abgewinkelte Achse (1) aufweist, **dadurch gekennzeichnet,** daß der Griff (4) in einer oberhalb der Achse (1) vorgesehenen Ebene liegend angeordnet ist, und daß der Griff (4) und die Achse (1) durch ein von der Achse (1) zum Griff (4) schräg nach oben verlaufendes Zwischenstück (13a, 13b) miteinander verbunden sind.

2. Rolle nach Anspruch 1, dadurch gekennzeichnet, daß das schräg verlaufende Zwischenstück (13a, 13b) derart abgewinkelt ist, daß die Mittellinie (M-M) des Griffes (4) etwa symmetrisch zu der von der Achse (1) getragenen Rolle (2, 8, 20) liegt.

3. Rolle nach Anspruch 1, dadurch gekennzeichnet, daß die nach oben gerichtete Schräge des Zwischenstückes von der Achse (1) zum Griff (4) etwa 35° beträgt.

4. Rolle nach Anspruch 1, dadurch gekennzeichnet, daß die nach oben gerichtete Schräge des Zwischenstückes (13b) von der Achse (1) zum Griff (4) wenigstens bis zur Oberkante der Rolle (2) reicht.

5. Rolle nach Anspruch 1, dadurch gekennzeichnet, daß die Abwinklung des Teiles (13b) des Zwischenstückes (13a, 13b) zur Mittellinie (M-M) des Griffes (4) hin etwa 45° beträgt.

6. Rolle nach Anspruch 5, dadurch gekennzeichnet, daß das Zwischenstück (13a, 13b) zwischen der Achse (1) und dem Griff (4) die Rolle (2, 8, 20) umgreift.

7. Rolle nach Anspruch 1, dadurch gekennzeichnet, daß die Achse (1), das Zwischenstück (13a, 13b) und der Griff (4) aus einem Stück bestehen.

8. Rolle nach Anspruch 7, dadurch gekennzeichnet, daß die Achse (1), das Zwischenstück (13a, 13b) und der Griff (4) aus einem gebogenen Draht bestehen.

9. Rolle nach Anspruch 1, dadurch gekennzeichnet, daß der Griff (4) aus einem U-förmig gebogenen Draht besteht, dessen Schenkel in der Mittelebene auf der Seite der Rolle zusammengeführt sind.

10. Rolle nach Anspruch 9, dadurch gekennzeichnet, daß die Enden der U-Schenkel des Griffes (4) miteinander verschweißt sind.

11. Rolle nach Anspruch 1, dadurch gekennzeichnet, daß die Achse (1), das Zwischenstück (13a, 13b) und der Griff (4) aus einem hochwertigen Edelstahldraht bestehen.

12. Rolle nach Anspruch 1, dadurch gekennzeichnet, daß die Rolle (2, 8, 20) auf die Achse (1) aufsteckbar ausgebildet ist.

13. Rolle nach Anspruch 12, dadurch gekennzeichnet, daß die Rolle (2, 8, 20) eine aus Kunststoff bestehende Lagerhülse (3) aufweist, in die die Achse (1) einsteckbar ist.

14. Rolle nach Anspruch 1, dadurch gekennzeichnet, daß die Rolle (2, 8, 20) aus Holz besteht.

15. Rolle nach Anspruch 1, dadurch gekennzeichnet, daß die Rolle (2, 8) zylindrisch ausgebildet ist.

16. Rolle nach Anspruch 1, dadurch gekennzeichnet, daß die Rolle (20) kegelförmig ausgebildet ist.

17. Rolle nach Anspruch 16, dadurch gekennzeichnet, daß die Rolle (20) als Kegelstumpf ausgebildet ist.

18. Rolle nach Anspruch 1, dadurch gekennzeichnet, daß die Rolle (2, 8, 20) auf ihrer Oberfläche Erhebungen und/oder Vertiefungen aufweist, welche beim Überrollen des Teiges (9) Abdrücke (30, 31) im Teig hinterlassen.

## Claims

1. Roller with a handle for rolling or pressing dough, whereby the roller (2, 8, 20) has a mount (3) for an axle (1) set at an angle to the handle (4),
**characterized in that** the handle (4) is positioned horizontally in a plane provided above the axle (1), and that the handle (4) and the axle (1) are connected with each other by an intermediate section (13a, 13b) running diagonally upwards from the axle to the handle (4).

2. Roller according to claim 1, characterized in that the diagonally running intermediate section (13a, 13b) is angled in such a way that the center line (M-M) of the handle (4) lies approximately symmetrically to the roller (2, 8, 20) carried by the axle (1).

3. Roller according to claim 1, characterized in that the upwardly oriented incline of the intermediate section from the axle (1) to the handle (4) is approximately 35°.

4. Roller according to claim 1, characterized in that the upwardly oriented incline of the intermediate section (13b) from the axle (1) to the handle (4) reaches at least to the top edge of the roller (2),

5. Roller according to claim 1, characterized in that the angle at which the part (13b) of the intermediate section (13a, 13b) is set towards the center line (M-M) of the handle (4) is approximately 45°.

6. Roller according to claim 5, characterized in that the intermediate section (13a, 13b) between the axle (1) and the handle (4) encompasses the roller (2, 8, 20).

7. Roller according to claim 1, characterized in that the axle (1), the intermediate section (13a, 13b) and the handle (4) comprise one piece.

8. Roller according to claim 7, characterized in that the axle (1), the intermediate section (13a, 13b) and the handle (4) are made of a bent wire.

9. Roller according to claim 1, characterized in that the handle (4) is made of a U-shaped bent wire whose sides are joined in the central plane on the side of the roller.

10. Roller according to claim 9, characterized in that the ends of the U-sides of the handle (4) are welded to each other.

11. Roller according to claim 1, characterized in that the axle (1), the intermediate section (13a, 13b) and the handle (4) are made of a high-grade special steel wire.

12. Roller according to claim 1, characterized in that the roller (2, 8, 20) is formed to clip onto the axle (1)

13. Roller according to claim 12, characterized in that the roller (2, 8, 20) has a bearing sleeve (3) made of plastic, in which sleeve the axle (1) is insertable.

14. Roller according to claim 1, characterized in that the roller (2, 8, 20) is made of wood.

15. Roller according to claim 1, characterized in that the roller (2, 8) is cylindrically shaped.

16. Roller according to claim 1, characterized in that the roller (20) is tapered in shape.

17. Roller according to claim 16, characterized in that the roller (20) is formed as a truncated cone.

18. Roller according to claim 1, characterized in that the roller (2, 8, 20) has on its surface elevations and/or depressions which leave imprints (30, 31) in the dough on rolling over the dough (9).

## Revendications

1. Rouleau avec un manche pour rouler et/ou presser de la pâte à pâtisserie, dans lequel le rouleau (2, 8, 20) présente un logement (3) pour un axe (1) replié en angle droit en direction du manche (4), caractérisé en ce que le manche (4) est disposé de manière horizontale dans un plan prévu au-dessus de l'axe (1) et en ce que le manche (4) et l'axe (1) sont reliés ensemble par un élément intermédiaire (13a, 13b) s'étendant vers le haut obliquement par rapport au manche (4).

2. Rouleau selon la revendication 1, caractérisé en ce que l'élément intermédiaire à disposition oblique (13a, 13b) est plié en angle droit de telle façon que l'axe central (M-M) du manche (4) est sensiblement symétrique au rouleau (2, 8, 20) porté par l'axe (1).

3. Rouleau selon la revendication 1, caractérisé en ce que l'inclinaison orientée vers le haut de l'élément intermédiaire de l'axe (1) par rapport au manche (4) est d'environ 35°.

4. Rouleau selon la revendication 1, caractérisé en ce que l'inclinaison orientée vers le haut de l'élément intermédiaire (13b) de l'axe (1) par rapport au manche (4) se poursuit au moins jusqu'au bord supérieur du rouleau (2).

5. Rouleau selon la revendication 1, caractérisé en ce que le pliage de la partie (13b) de l'élément intermédiaire (13a, 13b) vers l'axe central (M-M) du manche (4) est de l'ordre de 45°.

6. Rouleau selon la revendication 5, caractérisé en ce que l'élément intermédiaire (13a, 13b) enserre le rouleau (2, 8, 20) entre l'axe (1) et la poignée (4).

7. Rouleau selon la revendication 1, caractérisé en ce que l'axe (1), l'élément intermédiaire (13a, 13b) et le manche (4) sont une seule et même pièce.

8. Rouleau selon la revendication 7, caractérisé en ce que l'axe (1), l'élément intermédiaire (13a, 13b) et le manche (4) se composent d'un fil recourbé.

9. Rouleau selon la revendication 1, caractérisé en ce que le manche (4) se compose d'un fil recourbé en forme de U, dont les branches sont, dans le plan médian, rapprochées l'une de l'autre sur le côté du rouleau.

10. Rouleau selon la revendication 9, caractérisé en ce que les extrémités des branches en U du manche (4) sont soudées ensemble.

11. Rouleau selon la revendication 1, caractérisé en ce que l'axe (1), l'élément intermédiaire (13a, 13b) et le manche (4) sont faits d'un fil d'acier spécial de haute qualité.

12. Rouleau selon la revendication 1, caractérisé en ce que le rouleau (2, 8, 20) est conçu pour pouvoir être emmanché sur l'axe (1).

13. Rouleau selon la revendication 12, caractérisé en ce que le rouleau (2, 8, 20) est muni d'un manchon d'appui (3) en matière plastique, dans lequel l'axe (1) est destiné à être emmanché.

14. Rouleau selon la revendication 1, caractérisé en ce que le rouleau (2, 8, 20) est en bois.

15. Rouleau selon la revendication 1, caractérisé en ce que le rouleau (2, 8) a une forme cylindrique.

16. Rouleau selon la revendication 1, caractérisé en ce que le rouleau (20) a une forme conique.

17. Rouleau selon la revendication 16, caractérisé en ce que le rouleau (20) a la forme d'un tronc de cône.

18. Rouleau selon la revendication 1, caractérisé en ce que le rouleau (2, 8, 20) présente sur sa surface des protubérances et/ou des dépressions qui, lors du roulage de la pâte (9) laissent des empreintes (30, 31) dans la pâte.
